(19) Europäisches Patentamt
European Patent Office
Office européen des brevets

(11) **EP 4 625 074 A1**

(12) **EUROPEAN PATENT APPLICATION**
published in accordance with Art. 153(4) EPC

(43) Date of publication:
**01.10.2025 Bulletin 2025/40**

(21) Application number: **23950659.5**

(22) Date of filing: **28.08.2023**

(51) International Patent Classification (IPC):
**G05B 19/18** *(2006.01)*    **B23Q 15/00** *(2006.01)*

(52) Cooperative Patent Classification (CPC):
**B23Q 11/00; B23Q 11/10; B23Q 15/00; G05B 19/18**

(86) International application number:
**PCT/JP2023/031014**

(87) International publication number:
**WO 2025/046708 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Yamazaki Mazak Corporation**
**Niwa-gun, Aichi 480-0197 (JP)**

(72) Inventors:
• **YAMAMOTO, Yuuki**
**Niwa-gun, Aichi 480-0197 (JP)**
• **MATSUI, Jun**
**Niwa-gun, Aichi 480-0197 (JP)**
• **MATSUZAWA, Hiroaki**
**Niwa-gun, Aichi 480-0197 (JP)**
• **SUMIDA, Yasuharu**
**Niwa-gun, Aichi 480-0197 (JP)**
• **YAMAGUCHI, Keita**
**Niwa-gun, Aichi 480-0197 (JP)**

(74) Representative: **TBK**
**Bavariaring 4-6**
**80336 München (DE)**

(54) **MACHINE TOOL, MACHINE TOOL SYSTEM, PROGRAM, MACHINE TOOL CONTROL METHOD, AND PROGRAM GENERATION METHOD**

(57)    A control method of a machine tool includes: causing a processor of the machine tool to read a machining program comprising a program code and additional information, the program code representing at least one of operations of a workpiece and at least one tool by the machine tool, the additional information comprising at least cutting information obtained from a to-be-cut portion, the to-be-cut portion being obtained by excluding a product shape from a workpiece shape; and controlling the machine tool to actuate, based on the cutting information, at least one piece of peripheral equipment other than a piece of equipment for operating the workpiece and a piece of equipment for operating the at least one tool out of a plurality of pieces of equipment of the machine tool, when the machine tool performs the at least one of the operations.

**FIG. 6**

| Control flag | 1 |
| --- | --- |

43a1

| Energy saving level | Range of removal ratio | Ratio of output when rated output of first actuator is 100% |
| --- | --- | --- |
| 1 | Equal to or larger than TH1 | 100% |
| 2 | Equal to or larger than TH2 and smaller than TH1 (TH2 < TH1) | 70% |
| 3 | Smaller than TH2 | 70% |

43a2

**Description**

Technical Field

The present invention relates to a machine tool, a machine tool system, a program, a control method of the machine tool, and a generation method of the program.

Background Art

Patent Literature 1 describes a technique in which a numerical controller calculates a cutting volume from a machining program and controls equipment such as a coolant pump, based on the calculated cutting volume. Patent Literature 2 discloses a technique of inserting a cutting chip discharge command code immediately before a block in which a cutting amount predicted by a simulation exceeds a threshold value.

Citation List

Patent Literature

PTL1: JP H7-266185 A.
PTL2: JP 2017-199256 A.

Summary of Invention

Technical Problem

In a case of applying the technique of Patent Literature 1 to a machining program written in an EIA/ISO format, an accurate cutting volume is not calculated because only a movement amount of the tool is written in the machining program. In Patent Literature 2, the cutting amount predicted by the simulation is used, and is therefore based on a more accurate cutting amount. However, the cutting chip discharge command code to perform the same processing is output to different machine tools. Hence, it is only possible to control the different machine tools in a single cutting chip discharge method.

Solution to Problem

A laser control method of a machine tool according to a first embodiment of the present disclosure includes causing a processor of the machine tool to read a machining program comprising a program code and additional information, the program code representing at least one of operations of a workpiece and at least one tool by the machine tool, the additional information comprising at least cutting information obtained from a to-be-cut portion, the to-be-cut portion being obtained by excluding a product shape from a workpiece shape; and controlling the machine tool to actuate, based on the cutting information, at least one piece of peripheral equipment other than a piece of equipment for operating the workpiece and a piece of equipment for operating the at least one tool out of a plurality of pieces of equipment of the machine tool, when the machine tool performs the at least one of the operations.

According to a second embodiment of the present disclosure, in the control method according to the first embodiment, the additional information further comprises a control code for causing the machine tool to perform processing of controlling the at least one piece of peripheral equipment, based on the cutting information. Causing the machine tool to read the machining program comprises causing the machine tool to read the cutting information in accordance with the control code. Controlling the machine tool includes: causing the processor to determine a to-be-determined control method corresponding to the additional information out of at least one control method for the at least one piece of peripheral equipment, the at least one control method being stored in a storage of the machine tool; and actuating the at least one piece of peripheral equipment, based on the determined control method.

According to a third embodiment of the present disclosure, in the control method according to the second embodiment, the additional information further includes machining information representing a machining condition when the at least one operation is performed. Controlling the machine tool includes causing the processor to determine the to-be-determined control method, based on the machining information and the cutting information. The cutting condition is preferably a condition related to easiness in discharging the cutting chips or easiness in filtering the cutting chips in the coolant, such as a scattering degree of the cutting chips or a wight of the cutting chips.

According to a fourth embodiment of the present disclosure, in the control method according to one of the first embodiment to the third embodiment, the cutting information includes a parameter represented by at least a partial size of the to-be-cut portion. Controlling the machine tool includes: causing the processor to determine a to-be-determined equipment control method corresponding to the parameter of the cutting information out of a plurality of control methods for the at least one piece of peripheral equipment, the plurality of control methods being stored in a storage of the machine tool and being respectively associated with a plurality of ranges of the parameter; and actuating the at least one piece of peripheral equipment, based on the determined control method.

According to a fifth embodiment of the present disclosure, in the control method according to one of the first embodiment to the fourth embodiment, the parameter includes a removal ratio obtained by dividing at least a partial volume of the to-be-cut portion by a machining time necessary for cutting with the at least one tool.

According to a sixth embodiment of the present disclosure, in the control method according to the fifth embodiment, the storage stores: information representing a first correspondence relationship between a plurality of ranges of the removal ratio and a plurality of energy saving levels respectively corresponding to the plurality of ranges; and information representing a second correspondence relationship between the plurality of energy saving levels and the plurality of control methods for the at least one piece of peripheral equipment. The plurality of control methods are defined to reduce an output of the at least one piece of peripheral equipment, as the energy saving level increases. The plurality of every saving levels are preferably defined to increase, as the removal ratio decreases.

According to a seventh embodiment of the present disclosure, in the control method according to one of the first embodiment to the sixth embodiment, the at least one piece of peripheral equipment comprises at least one of a coolant supplier, a chip conveyer, and a mist collector, which are comprised in the machine tool.

According to a generation method of a program according to an eighth embodiment of the present disclosure includes: causing a computer to calculate cutting information obtained from a to-be-cut portion, based on a workpiece shape and a product shape, the to-be-cut portion being obtained by excluding the product shape from the workpiece shape; and causing the computer to generate a machining program in which additional information comprising at least the cutting information is added to a program code for machining a workpiece to obtain the product shape, the program code representing at least one of operations of the workpiece and at least one tool by a machine tool.

According to a ninth embodiment of the present disclosure, in the generation method according to the eighth embodiment, the additional information further includes a control code for causing the machine tool to perform processing of controlling, based on the cutting information, at least one piece of peripheral equipment other than a piece of equipment for operating the workpiece and a piece of equipment for operating the at least one tool out of a plurality of pieces of equipment of the machine tool.

According to a tenth embodiment of the present disclosure, in the generation method according to the ninth embodiment, the additional information further comprises machining information representing a machining condition when the at least one of the operations is performed, and the control code is a code for causing the machine tool to perform the processing of controlling the at least one piece of peripheral equipment, based on the machining information and the cutting information. The cutting condition is preferably a condition related to easiness in discharging the cutting chips or easiness in filtering the cutting chips in the coolant, such as a scattering degree of the cutting chips or a wight of the cutting chips.

According to an eleventh embodiment of the present disclosure, in the generation method according to one of the eighth embodiment to the tenth embodiment, the cutting information includes a parameter represented by at least a partial size of the to-be-cut portion. The control code is a code for causing the machine tool to determine a to-be-determined equipment control method corresponding to the parameter of the cutting information out of a plurality of control methods for the at least one piece of peripheral equipment, the plurality of control methods being stored in a storage of the machine tool and being respectively associated with a plurality of ranges of the parameter, and actuating the at least one piece of peripheral equipment, based on a determined control method.

According to a twelfth embodiment of the present disclosure, in the generation method according to one of the eighth embodiment to the eleventh embodiment, the cutting information includes a removal ratio obtained by dividing at least a partial volume of the to-be-cut portion by a machining time necessary for cutting in the at least one of the operations. In other words, the parameter according to the eleventh embodiment includes a removal ratio obtained by dividing at least a partial volume of the to-be-cut portion by the machining time necessary for cutting with at least one tool.

According to a thirteenth embodiment of the present disclosure, in the generation method according to one of the eighth embodiment to the twelfth embodiment, the machining program is written in an EIA/ISO format.

A program according to a fourteenth embodiment of the present disclosure is a program including an instruction for causing a computer to perform the processing of the generation method according to one of the eighth embodiment to the thirteenth embodiment. The computer-readable medium according to the fourteenth embodiment of the present disclosure is a computer-readable medium including an instruction for causing the computer to perform the generation method according to one of the eighth embodiment to the thirteenth embodiment. Specifically, the computer-readable medium includes an instruction for causing the computer to perform processing including: calculating cutting information obtained from a to-be-cut portion, based on a workpiece shape and a product shape, the to-be-cut portion being obtained by excluding the product shape from the workpiece shape; and generating a machining program in which additional information including at least the cutting information is added to a program code for machining a workpiece to obtain the product shape, the program code representing at least one of operations of the workpiece and at least one tool by a machine tool. The computer according to the fourteenth embodiment of the present disclosure includes means for performing the generation method according to one of the eighth embodiment to the thirteenth embodiment. Specifically, the computer includes: a storage that stores a workpiece shape and a product shape; and a processor configured to: calculate cutting information obtained from a to-be-cut portion, based on the workpiece shape and the product shape, the to-be-cut portion being obtained by excluding the product shape from the workpiece shape; and generate a machining program in which additional information including at least the cutting information is added to a program code for machining a workpiece to obtain the product shape, the program code representing at least one of operations of the workpiece and at least one tool by a machine tool.

A machine tool according to the fifteenth embodiment of the present disclosure includes means for performing the method according to one of the first embodiment to the seventh embodiment. Specifically, the machine tool includes: an interface for inputting the machining program; first equipment for operating a workpiece; second equipment for operating at least one tool; at least one piece of peripheral equipment other than a piece of equipment for operating the workpiece and a piece of equipment for operating at least one tool; and a processor configured to control the first equipment and the second equipment, based on the machining program. The processor is configured to read, from the machining program, the program code representing at least one of operations of a workpiece and at least one tool and the additional information including at least cutting information obtained from a to-be-cut portion, the to-be-cut portion being obtained by excluding a product shape from a workpiece shape, and is configured to control and actuate at least one piece of peripheral equipment, based on the cutting information, when the machine tool performs the at least one of the operations. The interface includes all interfaces capable of data transmission and reception to and from the outside of the machine tool, such as interfaces for short-range wireless communication including wireless and wired LAN, Bluetooth (registered trademark), and Near Field Communication, and interfaces for external storages including USB and SD interfaces.

A machine tool system according to the sixteenth embodiment of the present disclosure includes: the computer including means for performing the generation method according to one of the eighth embodiment to the thirteenth embodiment; and the machine tool according to the fifteenth embodiment. Specifically, the machine tool system includes the computer and the machine tool. The machine tool includes: an interface for inputting the machining program; first equipment for operating a workpiece; second equipment for operating at least one tool; at least one piece of peripheral equipment other than a piece of equipment for operating the workpiece and a piece of equipment for operating at least one tool; and a processor configured to control the first equipment and the second equipment, based on the machining program. The processor is configured to read, from the machining program, the program code representing at least one of operations of a workpiece and at least one tool and the additional information including at least cutting information obtained from a to-be-cut portion, the to-be-cut portion being obtained by excluding a product shape from a workpiece shape, and is configured to control and actuate at least one piece of peripheral equipment, based on the cutting information, when the machine tool performs the at least one of the operations. The computer includes a storage that stores a workpiece shape and a product shape, and is configured to: calculate cutting information obtained from a to-be-cut portion, based on the workpiece shape and the product shape, the to-be-cut portion being obtained by excluding the product shape from the workpiece shape; and generate a machining program in which additional information including at least the cutting information is added to a program code for machining a workpiece to obtain the product shape, the program code representing at least one of operations of the workpiece and at least one tool by a machine tool.

In the program according to the fourteenth embodiment, the computer-readable storage medium, and the computer, the control method of the machine tool according to the first embodiment, the generation method of the program according to the eighth embodiment, the machine tool according to the fifteenth embodiment, and the machine tool system according to the sixteenth embodiment, since the cutting information is obtained from the to-be-cut portion, it becomes possible to control at least one piece of peripheral equipment, based on the cutting amount with higher accuracy than that in the invention related to JP H07-266185 A. In addition, in place of the chip discharge command code in JP 2017-199256 A, by including the cutting information in the machining program, it becomes possible to flexibly control at least one piece of peripheral equipment.

In the generation method according to the ninth embodiment, the program according to the fourteenth embodiment, the computer-readable medium, and the computer each including an instruction for causing the computer to perform processing of the generation method according to the ninth embodiment, the control method according to the second embodiment, the machine tool according to the fifteenth embodiment including means for performing the control method according to the second embodiment, and the machine tool system according to the sixteenth embodiment including the machine tool including means for performing the control method according to the second embodiment and a computer including means for performing the generation method according to the ninth embodiment, since the additional information includes the control information, the additional information is not information for reference, but is used by the machine tool to control at least one piece of peripheral equipment.

In the generation method according to the tenth embodiment, the program according to the fourteenth embodiment, the computer-readable medium, and the computer each including an instruction for causing the computer to perform processing of the generation method according to the tenth embodiment, the control method according to the third embodiment, the machine tool according to the fifteenth embodiment including means for performing the control method according to the third embodiment, and the machine tool system according to the sixteenth embodiment including the machine tool including means for performing the control method according to the third embodiment and the computer including means for performing the generation method according to the tenth embodiment, since the additional information includes the machining information related to the easiness in discharging the cutting chips such as a scattering degree and a weight of the cutting chips, it becomes possible to easily conduct the control of increasing the output of at least one piece of peripheral equipment when it is difficult to discharge the cutting chips.

In the generation method according to the eleventh embodiment, the program according to the fourteenth embodiment, the computer-readable medium, and the computer each including an instruction for causing the computer to perform processing of the generation method according to the eleventh embodiment, the control method according to the fourth embodiment, the machine tool according to the fifteenth embodiment including means for performing the control method according to the fourth embodiment, and the machine tool system according to the sixteenth embodiment including the machine tool including means for performing the control method according to the fourth embodiment and the computer including means for performing the generation method according to the eleventh embodiment, by defining a plurality of control methods according to the cutting information (and the machining information) in accordance with the characteristics of the machine tool, it becomes possible to set a different control method for every machine tool although the same cutting information (and machining information) is used. With the chip discharge command code in JP 2017-199256 A, it is only possible to conduct the same control for all the machine tools, but it becomes possible to control at least one piece of peripheral equipment more flexibly that the invention related to JP 2017-199256 A.

In the generation method according to the twelfth embodiment, the program according to the fourteenth embodiment, the computer-readable medium, and the computer each including an instruction for causing the computer to perform processing of the generation method according to the twelfth embodiment, the control method according to the fifth embodiment, the machine tool according to the fifteenth embodiment including means for performing the control method according to the fifth embodiment, and the machine tool system according to the sixteenth embodiment including the machine tool including means for performing the control method according to the fifth embodiment and the computer including means for performing the generation method according to the twelfth embodiment, since the cutting information is represented by the removal ratio, it becomes possible to easily conduct the control to increase the output of at least one piece of peripheral equipment when the cutting amount per unit time is large.

In the control method according to the sixth embodiment, the machine tool according to the fifteenth embodiment including the means for performing the control method according to the sixth embodiment, and the machine tool system according to the sixteenth embodiment including the machine tool including the means for performing the control method according to the sixth embodiment, the energy saving level can be set in accordance with the removal ratio. As the energy saving level increases, the output of the at least one piece of peripheral equipment is defined to decrease. This enables the user who uses the machine tool to objectively grasp how much electric power the machine tool is consuming.

In the control method according to the seventh embodiment, the machine tool according to the fifteenth embodiment including means for performing the control method according to the seventh embodiment, and the machine tool system according to the sixteenth embodiment including the machine tool including means for performing the control method according to the seventh embodiment, since at least one piece of peripheral equipment is used for adjusting machining environment, even though the output is changed, the machining speed and the machining accuracy are hardly affected. Therefore, the power consumption is easily reduced by controlling the output in accordance with the cutting condition.

In the control method according to the thirteenth embodiment, the program according to the fourteenth embodiment, the computer-readable medium, and the computer each including means for performing processing of the generation method according to the thirteenth embodiment, and the machine tool system according to the sixteenth embodiment including the computer including means for performing the control method according to the thirteenth embodiment, it becomes possible to easily control at least one piece of peripheral equipment in the machining program written in the generally used EIA/ISO format.

Effects of Invention

The technique disclosed in the present application provides a machine tool, a machine tool system, a program, a control method of the machine tool, and a generation method of the program, which are capable of controlling at least one piece of peripheral equipment, based on a highly accurate cutting amount, for example, and are also capable of flexibly controlling at least one piece of peripheral equipment in different machining tools.

Brief Description of Drawings

[FIG. 1] FIG. 1 is a configuration diagram of a schematic configuration of a machine tool according to an embodiment.
[FIG. 2] FIG. 2 is a block diagram of a hardware configuration of the machine tool according to an embodiment.
[FIG. 3] FIG. 3 is a flowchart of a processing flow of a generation method of a machining program according to an embodiment.
[FIG. 4] FIG. 4 illustrates an example of the machining program generated by a machining program generation program.
[FIG. 5] FIG. 5 illustrates details of individual data.
[FIG. 6] FIG. 6 illustrates data for controlling a first actuator, in equipment control information.
[FIG. 7] FIG. 7 illustrates data for controlling a second actuator, in the equipment control information.
[FIG. 8] FIG. 8 illustrates data for controlling a third actuator, in the equipment control information.
[FIG. 9] FIG. 9 illustrates data for controlling a fourth actuator, in the equipment control information.
[FIG. 10] FIG. 10 illustrates control information about a tool diameter and a tool rotational speed of machining conditions in the equipment control information.
[FIG. 11] FIG. 11 illustrates control information about a circumferential speed of the machining conditions in the equipment control information.
[FIG. 12] FIG. 12 illustrates control information about material information, applied to the first actuator, of the machining conditions in the equipment control information.
[FIG. 13] FIG. 13 illustrates control information about material information, applied to the second actuator, of the machining conditions in the equipment control information.
[FIG. 14] FIG. 14 is a flowchart of a processing flow of a control method of the machine tool.

Description of Embodiments

The present invention will now be described with reference to the accompanying drawings, wherein like reference numerals designate corresponding or identical elements throughout the various drawings.

<Embodiments>

<Configuration of Machine Tool 1>

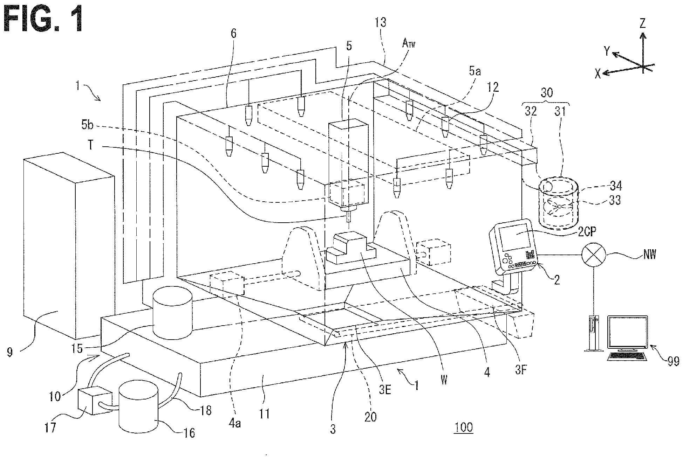

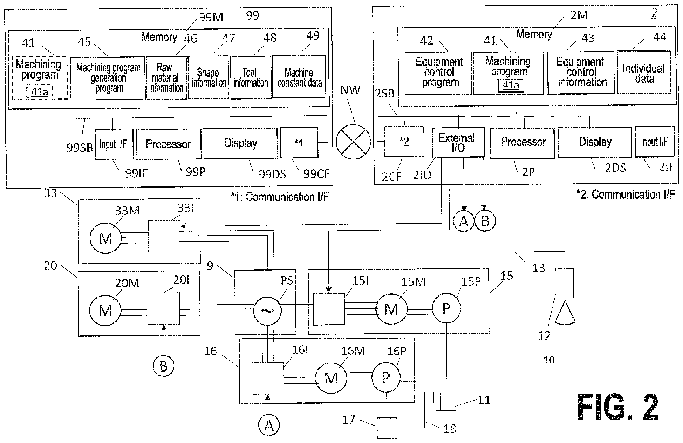

FIG. 1 is a block diagram of a configuration of a machine tool system 100, which includes a machine tool 1 according to an embodiment of the present invention. The machine tool system 100 includes the machine tool 1, and a computer 99, which is connected with the machine tool 1 through a network NW. The computer 99 may be a general-purpose computer including electronic circuits such as a hardware processor and a memory. The computer 99 is used for generating a machining program for use in the machine tool 1. The network NW may be a wired network such as an intranet or a wireless network such as a wireless LAN.
The machine tool 1 includes: a numerical controller 2; a base 3; a table 4 on which a workpiece W is placed; a spindle unit 5, which is configured for at least one tool T to be attached to; a housing 6; a switchboard 9; a coolant supplier 10; a chip collector 20; and a mist collector 30. The machine tool 1 includes a spindle mover 5a, which holds the spindle unit 5 and moves the spindle unit 5 in X-axis, Y-axis, and Z-axis directions in FIG. 1. The machine tool 1 includes a table mover 4a, which moves the table 4 in X-axis and Y-axis directions in FIG. 1. The machine tool 1 further includes an automatic tool changer, not illustrated, for changing a tool T attached to the spindle unit 5, from among at least one tool T. The housing 6 covers a machining region defined by movement ranges of the spindle mover 5a and the table mover 4a. In FIG. 1, for convenience of description, a wall on a near side of the housing 6 (in the positive direction of X-axis and the negative direction of Y-axis with respect to the table 4 and the spindle unit 5 in the drawing) is indicated by a one-dot chain line, and its inside is indicated by solid lines.
The numerical controller 2 includes: an electronic circuit such as an electronic control unit; an information processor such as a hardware processor 2P; and a storage such as a memory 2M (see FIG. 2). The hardware processor 2P controls the spindle mover 5a and the table mover 4a to rotate the tool T. The numerical controller 2 includes a control panel 2CP such as a touch panel display capable of inputting and outputting information to and from an operator. The touch panel of the control panel 2CP may be referred to as an input interface 2IF, and the display of the control panel 2CP may be referred to as a display 2DS. It is to be noted that the numerical controller 2 may further include the input interface 2IF such as a button or a dial, in addition to the touch panel.
The switchboard 9 supplies electricity to the numerical controller 2, the coolant supplier 10, the tip collector 20, and the mist collector 30. The machine tool 1 machines a workpiece W, which is placed on the table 4, using a tool T, which is attached to a tip end of the spindle unit 5. Here, Z-axis is defined as an axis along a tool rotation axis $A_{TW}$, Y-axis is defined as an axis perpendicular to Z-axis and along an upper surface of the base 3, and X-axis is defined as an axis perpendicular to Y axis and Z axis.

The coolant supplier 10 includes: a coolant tank 11; a plurality of nozzles 12; a plurality of coolant supply passages 13; a first pump 15; a second pump 16; a cutting chip removal filter 17; and a circulation circuit 18. In order to collect the coolant that has been injected onto the workpiece W, the base 3 includes: a discharge port 3E, which is connected with the coolant tank 11 provided at the center of the base 3; and a plurality of inclined floors (raked floors) 3F, which are inclined downward toward the discharge port 3E. The coolant tank 11 is configured to store the coolant. The plurality of coolant supply passages 13 connect the plurality of nozzles 12 with the coolant tank 11. The plurality of nozzles 12 are attached to the machine tool 1, and are configured to inject the coolant. The first pump 15 is configured to pump up the coolant from the coolant tank 11 and to supply the plurality of nozzles 12 with the coolant through the plurality of coolant supply passages 13. The coolant is injected from the plurality of nozzles 12, and is applied onto the workpiece W, which is being machined, and then cutting chips are removed.

The second pump 16 and the cutting chip removal filter 17 are connected with the coolant tank 11 through the circulation circuit 18, which is different from the plurality of coolant supply passages 13. The second pump 16 is configured to pump up the coolant from the coolant tank 11 and to supply the cutting chip removal filter 17 with the coolant through the circulation circuit 18. The cutting chip removal filter 17 removes the cutting chips contained in the coolant.

The chip collector 20 is a device that discharges cutting chips of the workpiece W that have dropped into the discharge port 3E to the outside of the machine tool 1 on a chip conveyor. The chip conveyor desirably includes a bank (an outer wall) so as not to drop the cutting chips to the outside of the chip conveyor, and desirably includes a scraper for convenience of transportation. In FIG. 1, the chip collector 20 is illustrated in a dotted line. The mist collector 30 includes: a device body 31, which includes a fan 33 and a filter 34 in the inside; and a duct 32, which is provided in the housing 6, and which is connected with the device body 31. The mist collector 30 rotates the fan, and then pumps out the coolant or oil in a mist form inside the housing 6.

FIG. 2 is a block diagram of a hardware configuration of the machine tool 1 according to an embodiment. As illustrated in FIG. 2, the numerical controller 2 is one type of computer, and includes a hardware processor 2P, a memory 2M, a display 2DS, an input interface 2IF, a system bus 2SB, an external I/O interface 2IO, and a communication interface 2CF. The system bus 2SB includes an address bus, a date bus, and a control bus in a similar manner to a general computer. The external I/O interface 2IO is connected with an external device (for example, the first pump 15, the second pump 16, the chip collector 20, and the fan 33). Such an external device may be referred to as at least one piece of peripheral equipment. That is, at least one piece of peripheral equipment includes at least one of the coolant supplier 10, the chip collector 20, and the fan 33. The coolant supplier 10 includes the first pump 15 and the second pump 16. The communication interface 2CF is connected with to a network CW.

A machining program 41 for machining the workpiece W, an equipment control program 42, equipment control information 43, and individual data 44 are installed in the memory 2M, and the memory 2M is configured to store the machining program 41, the equipment control program 42, the equipment control information 43, and the individual data 44. The machining program 41 includes: a program code representing at least one of operations of the workpiece W and at least one tool T by the machine tool 1; and additional information 41a for controlling at least one piece of peripheral equipment. The equipment control program 42 includes an interpreter of the machining program 41, and is programmed to read the additional information 41a written in the machining program 41, read the value of a control signal corresponding to the additional information 41a stored in the equipment control information 43, and output a control signal corresponding to at least one piece of peripheral equipment. The additional information 41a includes at least cutting information and a control code for causing the machine tool 1 to perform processing of controlling at least one piece of peripheral equipment, based on the cutting information obtained from a to-be-cut portion, which is obtained by excluding a product shape from a workpiece shape. The additional information 41a may further include machining information representing a machining condition for performing at least one operation. Details of the cutting information and the machining information will be described later.

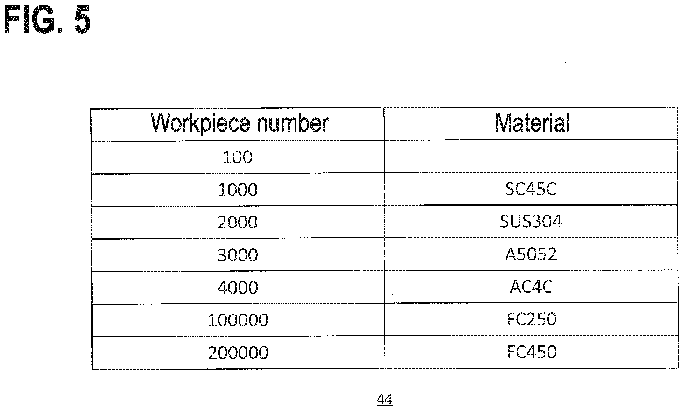

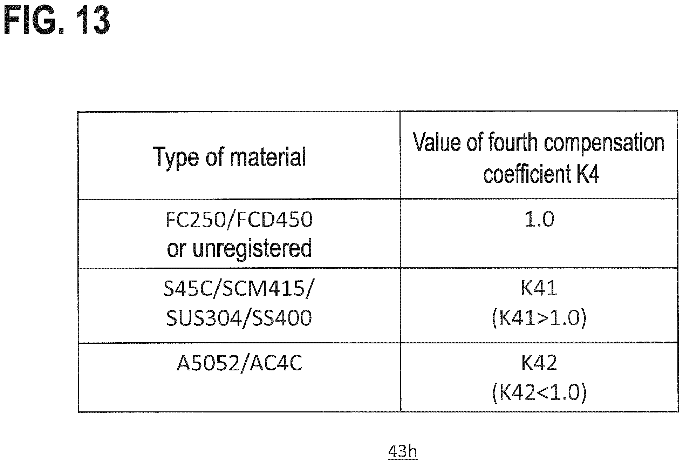

It is to be noted that in a case where the additional information 41a is not included in the machining program 41, the machining program 41 is programmed to read a default setting value from the equipment control information 43, read a value of a control signal corresponding to the default setting value, and output a control signal corresponding to at least one piece of peripheral equipment. The hardware processor 2P executes the machining program 41 to control the spindle unit 5. The hardware processor 2P executes the equipment control program 42 to control at least one piece of peripheral equipment. The equipment control program 42 includes an instruction to cause the hardware processor 2P to perform execution processing of the machining program 41, which is illustrated in FIG. 13 or another drawing to be described later. In the individual data 44, the material of the workpiece W to be machined is set for every machining program 41, and the individual data 44 is associated with a workpiece number WNo. to be used when the machine tool 1 calls and executes the machining program 41. Details of the individual data 44 will be described later in detail with reference to FIG. 5. It is to be noted that as will be described later, in a case where the material of the workpiece W to be machined is written in the additional information 41a for every machining program 41, the individual data 44 may be deleted.

The first pump 15 includes a first inverter 15I, a first motor 15M, and a first pump 15P. The first inverter 15I drives the first motor 15M in accordance with a drive signal transmitted from the numerical controller 2 via the external I/O interface 2IO. The first inverter 15I controls the rotational speed/operation frequency of the first motor 15M in accordance with the drive signal from the numerical controller 2. The first motor 15M rotates the swash plate of the first pump 15P. The first pump 15P is connected with the coolant tank 11. The first pump 15P is configured to discharge the coolant from the coolant tank 11, and to supply the plurality of nozzles 12 with the coolant. In the following embodiments, the first motor 15M may be referred to as a first actuator. That is, the first actuator (the first motor 15M) is configured to drive the pump (the first pump 15P) that supplies the nozzles 12 of the machine tool 1 with the coolant. The switchboard 9 includes a power supply PS, which supplies the first inverter 15I with electricity. The power supply PS is preferably an AC power supply.

The second pump 16 includes a second inverter 16I, a second motor 16M, and a second pump 16P. The second inverter 16I drives the second motor 16M in accordance with a drive signal transmitted from the numerical controller 2 via the external I/O interface 2IO. The second inverter 16I controls the rotational speed/operation frequency of the second motor 16M in accordance with the drive signal from the numerical controller 2. The second motor 16M rotates the swash plate of the second pump 16P. The second pump 16P is connected with the coolant tank 11. The second pump 16P is configured to pump up the coolant from the coolant tank 11, and to supply the cutting chip removal filter 17 with the coolant. In the following embodiments, the second motor 16M may be referred to as a second actuator. That is, the second actuator (the second motor 16M) is configured to drive the pump (the second pump 16P) that supplies the cutting chip removal filter 17 with the coolant including the cutting chips and stored in the coolant tank 11. The power supply PS of the switchboard 9 also supplies the second inverter 16I with electricity.

The chip collector 20 includes a third inverter 20I and a third motor 20M. The third inverter 20I drives the third motor 20M in accordance with a drive signal transmitted from the numerical controller 2 via the external I/O interface 2IO. The third inverter 20I controls the rotational speed/operation frequency of the third motor 20M in accordance with the drive signal from the numerical controller 2. The third motor 20M is configured to drive a belt conveyor via a reduction gear, not illustrated, or another piece of equipment. In the following embodiments, the third motor 20M may be referred to as a third actuator. That is, the third actuator (the third motor 20M) is configured to drive the chip conveyor of the machine tool 1. The power supply PS of the switchboard 9 also supplies the third inverter 20I with electricity.

The fan 33 of the mist collector 30 includes a fourth inverter 33I and a fourth motor 33M. The fourth inverter 33I drives the fourth motor 33M in accordance with a drive signal transmitted from the numerical controller 2 via the external I/O interface 2IO. The fourth inverter 33I controls the rotational speed/operation frequency of the fourth motor 33M in accordance with the drive signal from the numerical controller 2. The fourth motor 33M is configured to drive the belt conveyor via a reduction gear, not illustrated, or another piece of equipment. In the following embodiments, the fourth motor 33M may be referred to as a fourth actuator. That is, the fourth actuator (the fourth motor 33M) is configured to drive the fan (the fan 33) for discharging mist accumulated in the machine body of the machine tool 1. The power supply PS of the switchboard 9 also supplies the fourth inverter 33I with electricity.

The computer 99 is used, for example, to generate the machining program 41. In the computer 99, for example, a machining simulation program for displaying a workpiece shape before machining and creating a final product shape so as to be included in the workpiece shape is installed. The computer 99 is configured to automatically generate the machining program 41 based on a result of the machining simulation. The computer 99 includes a hardware processor 99P, a memory 99M, a display 99DS, an input interface 99IF, a system bus 99SB, and a communication interface 99CF, which respectively have substantially the same functions as those of the hardware processor 2P, the memory 2M, the display 2DS, the input interface 2IF, the system bus 2SB, and the communication interface 2CF. The memory 2M and the memory 99M each may be referred to as a storage. In the memory 99M of the computer 99, a machining program generation program 45, raw material information 46, shape information 47, tool information 48, machine constant data 49, and a program such as an operating system are installed. The memory 99M is configured to store the machining program generation program 45, the raw material information 46, the shape information 47, the tool information 48, the machine constant data 49, and the operating system.

The raw material information 46 includes reference information (such as material information and an ID) of a raw material of the workpiece W to be machined, a workpiece shape (an outer diameter, an inner diameter (in a case where a hole is formed), and a length), and a characteristic (a specific cutting resistance x ($kg/mm^2$)). The shape information 47 is data that defines a product shape. This is generated by the above-described machining simulation program. The tool information 48 includes a T number corresponding to the tool T, which is attachable to the machine tool 1, the name of the tool T, the material of the tool T, the characteristics of a cutting blade of the tool T, and the use state (the wear state) of the tool T. The characteristics of the cutting blade of the tool T include a nominal diameter of the tool T, a tool length, a tool diameter, an axial offset, a radial offset, the number of cutting blades, a cutting edge width, a curvature radius (a curvature radius of a cutting edge) R, which defines a cutting edge shape, an indexing angle of the cutting blade, an effective spindle rotation direction, and a cutting blade orientation. The machine constant data 49 is a parameter specific to the machine tool 1 for use in the calculation of a cutting condition. The cutting conditions of the tool T include a cutting speed Vc, a cutting amount of the tool T into the workpiece W, and a feed speed of the workpiece W. The machine constant data 49 denotes, for example, a mechanical efficiency η, a machine horsepower HP (HP), and a machining limit (finishing allowance). The material information 46, the shape information 47, the tool information 48, and the machine constant data 49 are read by the machining simulation program. The tool information 48 and the machine constant data 49 may be periodically updated to data corresponding to the latest settings of the machine tool 1 through the network NW.

The machining program generation program 45 typically serves as a part of the machining simulation program described above, and is a program for generating the machining program 41 including the additional information 41a for controlling at least one piece of peripheral equipment described above. However, the machining program generation program 45 may be a program different from the machining simulation program. When the machining program generation program 45 is executed on the computer 99, the hardware processor 99P generates the machining program 41 including the additional information 41a for controlling at least one piece of peripheral equipment described above, based on the raw material information 46, the shape information 47, the tool information 48, and the machine constant data 49, which are stored in the memory 99M. Alternatively, in another embodiment, the hardware processor 99P may generate the machining program 41 including the additional information 41a, based on the program code that does not include the additional information 41a, the raw material information 46, the shape information 47, the tool information 48, and the machine constant data 49, which are stored in the memory 99M. The machining program 41, which has been generated on the computer 99, is sent to the numerical controller 2 via the communication interface 99CF, the network NW, and the communication interface 2CF.

<Processing Flow of Generation Method of Machining Program 41>

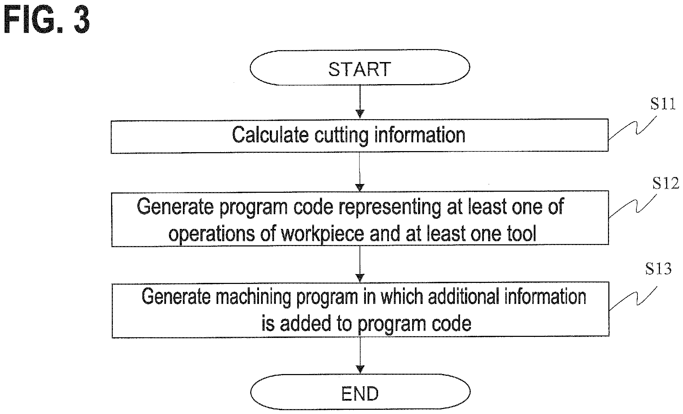

FIG. 3 is a flowchart of a processing flow of a generation method of the machining program 41 according to an embodiment. As step S11, the generation method further includes causing the computer 99 to calculate cutting information obtained from a to-be-cut portion, which is obtained by excluding the product shape from the workpiece shape. Specifically, in step S1, the hardware processor 99P, which executes the machining program generation program 45, calculates cutting information obtained from the to-be-cut portion, which is obtained by excluding the product shape from the workpiece shape, based on the workpiece shape stored as the raw material information 46 in the memory 99M and the product shape stored as the shape information 47 in the memory 99M. As step S12, the generation method includes generating a program code representing at least one of operations of the workpiece W and at least one tool T by the machine tool 1 for machining the workpiece W to obtain the product shape. Specifically, in step S12, the hardware processor 99P, which executes the machining program generation program 45, generates the program code representing at least one of operations of the workpiece W and at least one tool T by the machine tool 1 for machining the workpiece W to obtain the product shape. This program generation method is, for example, a method of applying a known method as disclosed in WO 2004/038522 to a program in the EIA/ISO format. It is to be noted that in a case where such a program code has already been generated, step S12 may be omitted. As step S13, the generation method includes causing the computer 99 to generate the machining program 41 in which the additional information 41a is added to such a program code. Specifically, in step S13, the hardware processor 99P, which executes the machining program generation program 45, generates the machining program 41 in which the additional information 41a is added to such a program code.

The additional information 41a includes: the cutting information; the machining information representing a machining condition when the machine tool 1 performs at least one of operations of the workpiece W and at least one tool T; and a control code G181 and/or a control code G182 (to be described later) for causing the machine tool 1 to perform processing of controlling at least one piece of peripheral equipment (for example, the first pump 15, the second pump 16, the chip collector 20, and the fan 33) other than first equipment (for example, the table mover 4a described above) out of the plurality of pieces of equipment of the machine tool 1 for operating the workpiece W and second equipment (for example, the spindle mover 5a and a motor 5b for rotating at least one tool T in the spindle unit 5) for operating at least one tool T, based on the machining information and the cutting information. The machining information denotes information related to easiness in filtering the cutting chips, such as a scattering state and a weight of the cutting chips, and easiness in filtering the cutting chips in the coolant.

<Machining Program 41 Including Additional Information 41a>

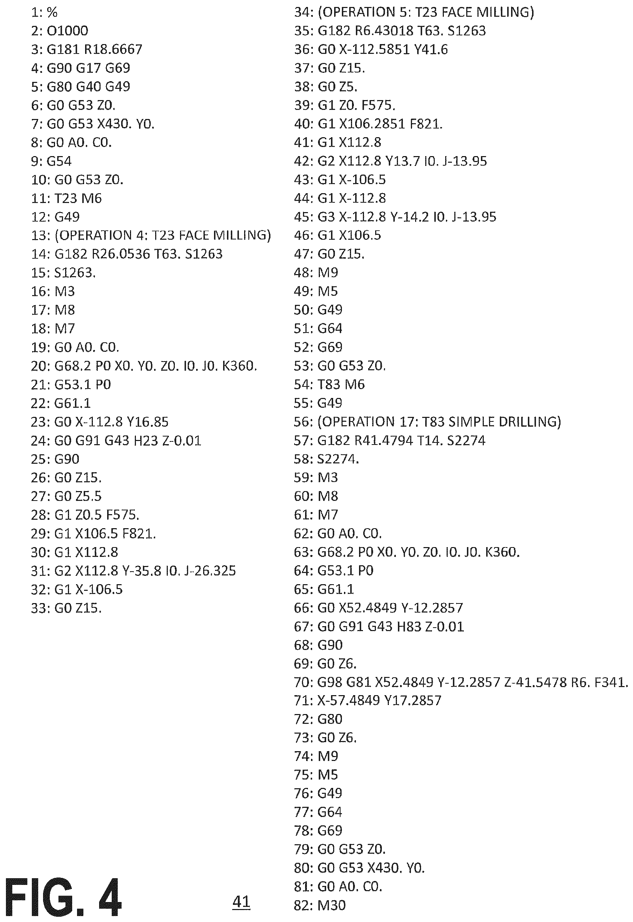

FIG. 4 illustrates an example of the machining program 41 generated by the machining program generation program 45. The machining program 41 is written in the EIA/ISO format. In FIG. 4, line numbers are applied to left ends of program codes for convenience of description. In FIG. 4, the line that does not include either the control code G181 or G182, which will be described later, denotes a program code representing one of operations of the workpiece W and at least one tool T by the machine tool 1. In FIG. 4, in the line number 2, subsequent to an identifier O (O of alphabet), a workpiece number WNo. is written in numerical values. In the line number 3, the control code G181 and its argument are inserted as the additional information 41a. In the argument, numerical values together with an identifier R denote a removal ratio applied to some pieces of peripheral equipment of at least one piece of peripheral equipment or a removal ratio applied to the entire machining program 41 except for a range in which the control code G182 to be described later is applied to remaining piece(s) of peripheral equipment of the at least one piece of peripheral equipment. The removal ratio is a value obtained by dividing the volume that has been cut (unit: cc, inch$^3$) in a predetermined step of the machining program 41 by a necessary time (unit: min) of the step. The removal ratio is a parameter represented by at least a partial size of the to-be-cut portion, and is an example of the cutting information. That is, the cutting information includes a parameter represented by at least the partial size of the to-be-cut portion. The parameter represented by at least the partial size of the to-be-cut portion is not limited to at least a partial volume of the to-be-cut portion, but includes all values depending on at least a partial size of the to-be-cut portion that is detectable by a sensor or a driver of a motor that rotates the tool, such as at least a partial weight of the to-be-cut portion, a work load (load × time) of at least one tool T for at least partially cutting the to-be-cut portion, and a quantity of heat generated in at least partially cutting the to-be-cut portion. The removal ratio written as the argument of the control code G181 is a value obtained by dividing the volume of the entire to-be-cut portion by the entire necessary time of the machining program 41. The volume of the entire to-be-cut portion is a value obtained by subtracting the entire product shape from the entire workpiece shape.

After a milling tool of T number 23 is called in the line number 11, the control code G182 and its argument are inserted as the additional information 41a in the line number 14. In the argument, numerical values together with the identifier R denote the removal ratio to be applied in a process until the next control code G182 is called (the line number 35). In the following description of embodiments, a process from when a specific control code G182(i) (i = 1, 2, ... , and i corresponds to the sequential order that appears in the machining program 41) starts to when the next control code G182(i + 1) is called will be referred to as a process to which the control code G182(i) is applied. The removal ratio mentioned here denotes a value obtained by dividing at least a partial volume (unit: cc, inch$^3$) of the to-be-cut portion to be cut in the process from the line number 14 to the line number 35 by the machining time (unit: min) necessary for cutting with the tool of T number 23. The processor 99P, which executes the machining program generation program 45, is capable of calculating the removal ratio to be described below in the process from the line number 14 to the line number 35.

It is sufficient for the processor 99P, which executes the machining program generation program 45, to calculate at least a partial volume of the to-be-cut portion for every machining portion, in a case where the machining portion is designated by input from a user, calculate the removal ratio by estimating the machining time from the feed rate of the generated program code, and insert the control code G182 having the removal ratio as an argument immediately before a program code based on the EIA/ISO format generated for every machining portion. It is sufficient for the processor 99P, which executes the machining program generation program 45 for generating a machining program based on the EIA/ISO format in the method in WO 2004/038522, to calculate, for example, a removal ratio corresponding to each machining shape body portion, and insert the control code G182 having, as an argument, the removal ratio that has been calculated immediately before the source code for machining the machining shape body portion.

In the argument, numerical values together with an identifier T represents a tool diameter (unit: mm or inch) to be applied in a process that continues until the next control code G182 is called (the line number 35). In the argument, numerical values together with an identifier S represents a tool rotational speed (unit: rev/min) applied in the process that continues until the next control code G182 is called (the line number 35). The tool diameter and the tool rotational speed are each one example of the machining condition when at least one operation is performed. That is, the machining information includes the tool diameter and the tool rotational speed. The processor 99P, which executes the machining program generation program 45 for generating a machining program based on the EIA/ISO format in the method in WO 2004/038522, is capable of calculating the tool diameter with reference to, for example, the tool information 48 (the tool definition portion 21 in WO 2004/038522) from the T code representing the tool corresponding to each machining shape body portion. Similarly, the processor 99P, which executes the machining program generation program 45 for generating a machining program based on the EIA/ISO format in the method in WO 2004/038522, is capable of acquiring the tool rotational speed designated by a parameter input controller 13 from the T code representing the tool corresponding to each machining shape body portion. (The tool information 48 in the present application also includes data representing the tool rotational speed designated by the parameter input controller 13. In order to add the control code G181 and/or the control code G182 to the machining program based on the EIA/ISO format, the processor that executes the machining program generation program 45 is capable of obtaining the tool diameter with reference to the tool information 48 from the T number (T23) of the tool to be used in the process, when the process from the line number 14 to the line number 35 is designated by input from the user or any input. When the process from the line number 14 to the line number 35 is designated by the input from the user or any input, the processor that executes the machining program generation program 45 is capable of obtaining the rotational speed of the tool with reference to the code (the line number 15) representing the spindle rotational speed in the process.

Hereinafter, in the line numbers 35 and 57, the control code G182 and the additional information 41a including the above-described removal ratio, the tool diameter, and the rotational speed, are written. The additional information 41a in the line number 35 is applied to the process from the line number 35 to the line number 57. The method for obtaining the value of this additional information is the same as that of the additional information 41a of line number 14, and thus the description will be omitted. The control code G182 is not written in the line number 57 or later, and a program code M30 indicating the end of the machining program 41 is provided in the line number 82. Therefore, the additional information 41a in the line number 57 is applied in the process from the line number 35 to the end of the program. The method for obtaining the values of such additional information is the same as that of the additional information 41a in the line number 14, and thus the description will be omitted.

In the examples heretofore, a case where the machining direction includes the tool diameter and the rotational speed is illustrated, but may additionally include a circumferential speed or material information of the workpiece W. For example, the circumferential speed may be represented by numerical values together with an identifier V subsequent to the control code G182, and it is sufficient if the numerical values are represented by a value of the circumferential speed (unit: m/min or feet/min). The processor that executes the machining program generation program 45 is capable of obtaining the circumferential speed with reference to a code (a code in which numerical value(s) is (are) added to an identifier F) representing the circumferential speed effective in the process to which the control code G182 is applied. The material information of the workpiece W may be further included as the machining condition of the argument of the control code G181. The material information is represented by, for example, numerical value(s) together with an identifier M subsequent to the control code G181, and the numerical value(s) correspond to the material. For example, it is sufficient to represent FC250 as 1, FCD450 as 2, S45C as 3, SCN415 as 4, SUS304 as 5, SS400 as 6, A5052 as 7, and AC4C as 8. FC250 and FCD450 are each a cast iron-based alloy. S45C, SCM415, SUS304, and SS400 are each a steel-based alloy. A5052 and AC4C are each an aluminum-based alloy. Thus, as the numerical value(s) subsequent to the identifier M is larger, the metal is softer. The processor that executes the machining program generation program 45 is capable of obtaining the material information with reference to the raw material information 46.

<Processing of Machining Program 41 in Machine Tool 1>

The machining program 41 provided with the additional information 41a that has been generated in this manner is sent to the numerical controller 2 of the machine tool 1 through the network NW, for example. The numerical controller 2 processes the additional information 41a of the machining program 41 as follows. The hardware processor 99P, which executes the machining program 41, acquires the workpiece number WNo. at the beginning of the machining program 41, and acquires the material information corresponding to the workpiece number WNo. with reference to the individual data 44. FIG. 5 illustrates details of the individual data 44. The individual data 44 includes a correspondence relationship between the workpiece number WNo. and the material information. In FIG. 5, the correspondence relationship is illustrated in a table, but the correspondence relationship may be written in a known method such as a csv file format or a database. In the examples of FIGs. 4 and 5, since the workpiece number WNo. is 1000, it is possible to obtain the material as SC45C.

It is to be noted that as in the program of the workpiece number 100 in FIG. 5, in a case where the material is not defined, an interface (for example, a drop-down window) for inputting the material is activated when the machining program 41 starts, and it is possible to prompt the user to input the material. Alternatively, in a case where the material is not input, FC250 or FCD450, which is a cast iron-based alloy, may be set by default. It is to be noted that in a case where the material is defined as an argument of the control code G181, the material may not necessarily be determined with reference to the individual data 44.

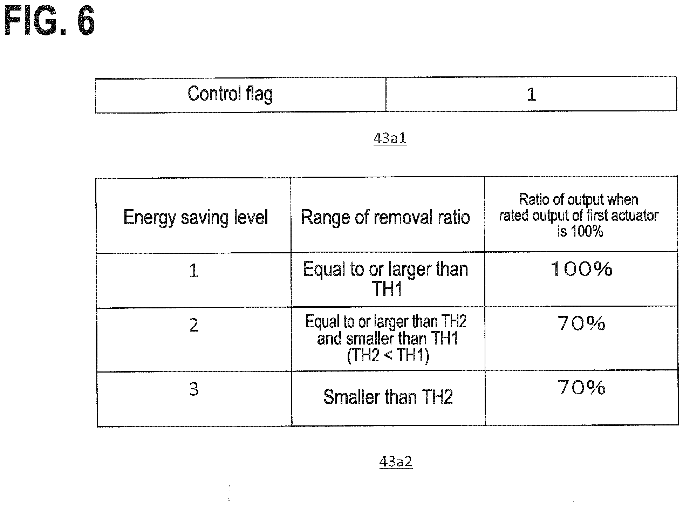

Next, the hardware processor 99P, which executes the machining program 41, refers to the argument of the control code G181, and reads the removal ratio to be applied to the above-described piece(s) of peripheral equipment or the default removal ratio to be applied to the above-described remaining piece(s) of peripheral equipment. That is, the hardware processor 99P reads the cutting information in accordance with the control code G181. The hardware processor 99P controls piece(s) of peripheral equipment (for example, the second pump 16) with reference to the equipment control information 43 illustrated in FIGs. 6 to 12, based on the cutting information and the machining information, in the entire execution time of the machining program 41. The default removal ratios for the above-described remaining piece(s) of peripheral equipment (for example, the first pump 15, the chip collector 20, and the fan 33) are valid removal ratios until the control code G182 to be described below is called. In a case where the material information is included in the argument of the code G181, the hardware processor 99P also reads the material information with reference to the argument of the control code G181.

The hardware processor 99P, which executes the machining program 41, changes the tool to the tool of T number 23 in accordance with the code of the line number 11, and then reads the control code G182 in the line number 14. The hardware processor 99P reads the cutting information and the machining information with reference to the argument of the control code G182. The hardware processor 99P controls the remaining piece(s) of peripheral equipment (for example, the first pump 15, the chip collector 20, and the fan 33) with reference to the equipment control information 43, which is illustrated in FIGs. 6 to 12, based on the cutting information and the machining information.

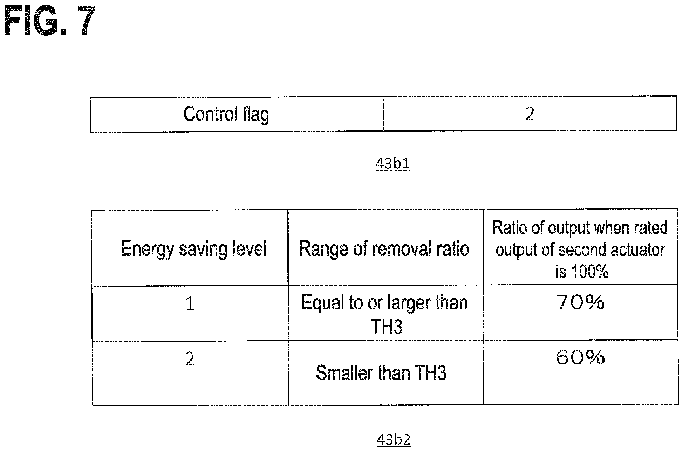

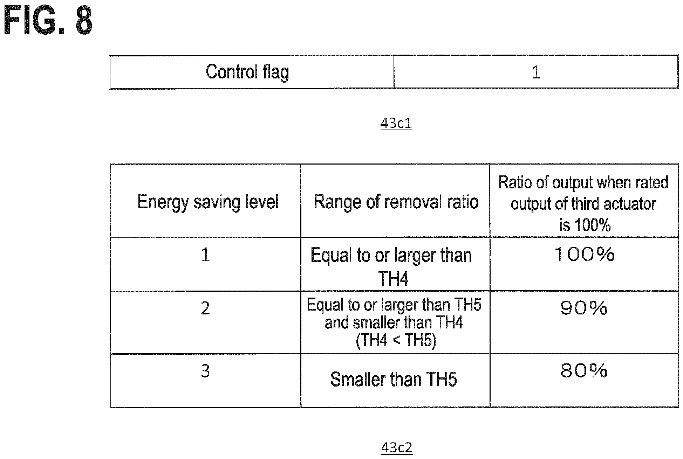

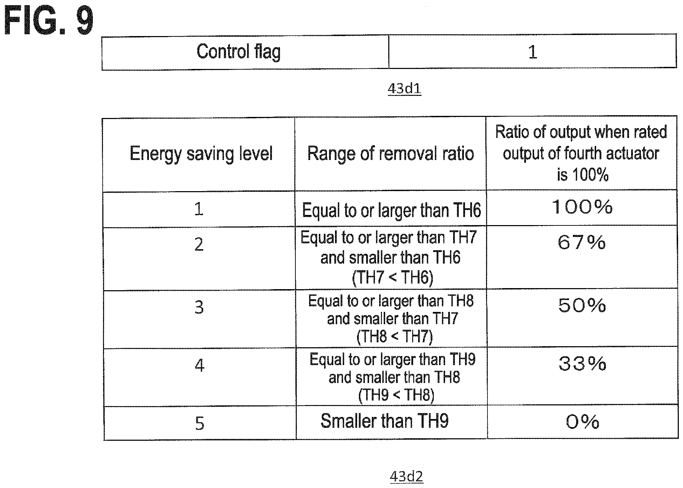

FIG. 6 illustrates data 43a1 and 43a2 for controlling the first actuator (the first motor 15M), in the equipment control information 43. FIG. 7 illustrates data 43a1 and 43b2 for controlling the second actuator (the second motor 16M), in the equipment control information 43. FIG. 8 illustrates data 43c1 and 43c2 for controlling the third actuator (the third motor 20M), in the equipment control information 43. FIG. 9 illustrates data 43d1 and 43d2 for controlling the fourth actuator (the fourth motor 33M), in the equipment control information 43. The data 43a1 to 43d1 each include a flag representing either the piece(s) of peripheral equipment to which only the control code G181 is applied or the remaining piece(s) of peripheral equipment to which the control code G181 or the control code G182 is applied. The data 43a2 to 43d2 each include a correspondence relationship among a range of the removal ratio, an energy saving level, and a ratio of the output when the rated outputs of the first to fourth actuators are each 100%. In FIGs. 6 to 9, the correspondence relationship is illustrated in a table, but the correspondence relationship may be written in a known method such as a csv file format or a database. As illustrated in FIGs. 6 to 9, a control flag "2" for the data 43b2 indicates the piece(s) of peripheral equipment to which only the control code G181 is applied. The control flag "1" for the data 43a2, 43c2, and 43d2 indicates the remaining piece(s) of peripheral equipment to which the control code G181 or the control code G182 is applied. Such a control flag is editable. By editing the control flag, the operator is able to switch to at least one of the piece(s) of peripheral equipment to which only the control code G181 is applied and the remaining piece(s) of peripheral equipment to which the control code G181 or the control code G182 is applied.

As illustrated in FIGs. 6 to 9, the data 43a2 to 43d2 each include a plurality of energy saving levels respectively corresponding to a plurality of ranges of the removal ratio. The energy saving level is a value indicating a ratio of each output in percentage, in a case where the output obtained when each of the first to fourth actuators is driven at rated power consumption is 100%. As illustrated in FIGs. 6 to 9, different numbers of the energy saving levels are set in the first to fourth actuators. As illustrated in FIGs. 6 to 9, in the first to fourth actuators, the range of the removal ratio for determining each energy saving level is independently set. Thresholds TH1 to TH9 illustrated in FIGs. 6 to 9 are empirically determined values, and some of the thresholds TH1 to TH9 may be identical values. The output ratio is an empirically determined value, and any value other than the values illustrated in FIGs. 6 to 9 may be used. The output ratio corresponds to a control method for at least one piece of peripheral equipment. Therefore, the plurality of control methods for at least one piece of peripheral equipment are respectively associated with the plurality of ranges of the parameter (the removal ratio) represented by at least a partial size of the to-be-cut portion.

The memory 2M stores information representing a first correspondence relationship between a plurality of ranges of the removal ratio and a plurality of energy saving levels respectively corresponding to the plurality of ranges of the removal ratio, and information representing a second correspondence relationship between the plurality of energy saving levels and a plurality of control methods for at least one piece of peripheral equipment. As is apparent from FIGs. 6 to 9, the plurality of control methods are defined in such a manner that as the energy saving level increases, the output of at least one piece of peripheral equipment decreases. The plurality of energy saving levels are defined to increase, as the removal ratio decreases. However, in the memory 2M, among the contents illustrated in FIGs. 6 to 9, only the values of the energy saving levels, the thresholds TH1 to TH9, and the values of the output ratio may be stored, so that the hardware processor 2P, which executes the equipment control program 42, may determine the output ratio based on the criteria illustrated in FIGs. 6 to 9, by using the data stored in the memory 2M. In this manner, the hardware processor 2P, which executes the equipment control program 42, is capable of determining a to-be-determined control method corresponding to the additional information 41a out of at least one control method (more preferably, a plurality of control methods) for at least one piece of peripheral equipment and stored in the memory 2M. More specifically, the hardware processor 2P, which executes the equipment control program 42, is capable of determining the to-be-determined control method, based on the machining information and the cutting information.

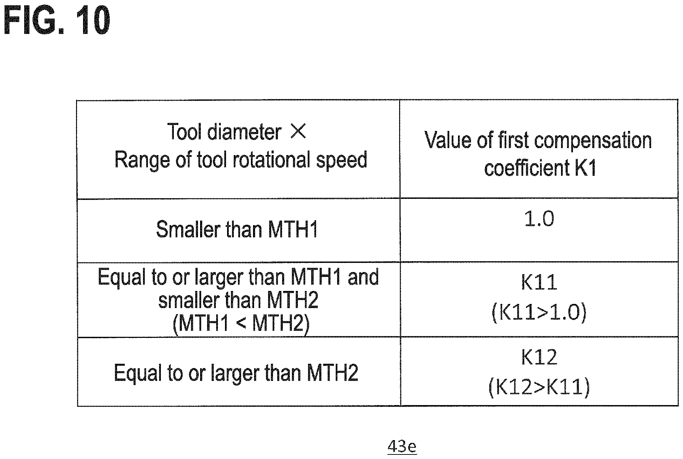

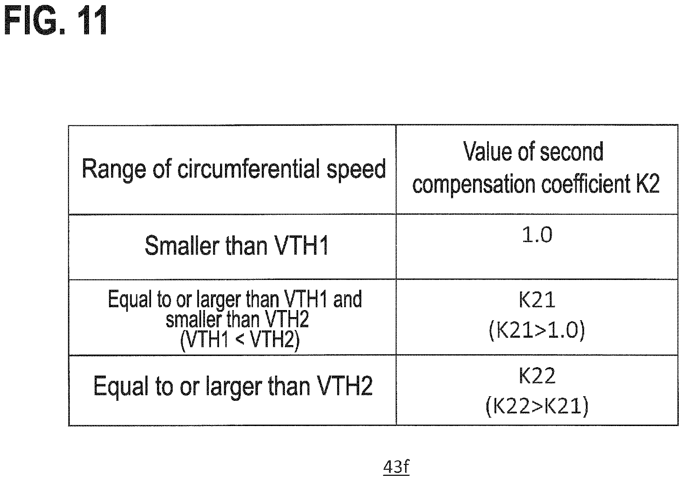

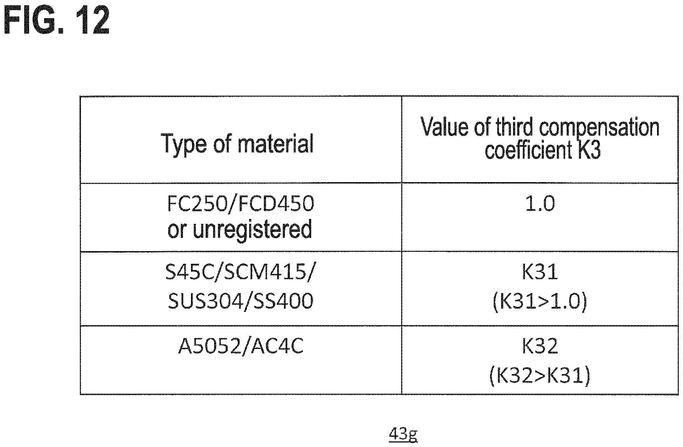

FIG. 10 illustrates control information 43e about the tool diameter and the tool rotational speed of the machining conditions in the equipment control information 43. FIG. 11 illustrates control information 43f about the circumferential speed of the machining conditions in the equipment control information 43. FIG. 12 illustrates control information 43g about the material information applied to the first actuator (the first motor 15M) of the machining conditions in the equipment control information 43. FIG. 13 illustrates control information 43h about the material information applied to the second actuator (the second motor 16M) of the machining conditions in the equipment control information 43. The control information 43e includes a first compensation coefficient K1 to be multiplied by the output ratio set in accordance with the removal ratio illustrated in FIG. 6. The control information 43f includes a second compensation coefficient K2 to be multiplied by the output ratio set in accordance with the removal ratio illustrated in FIG. 6. The control information 43g includes a third compensation coefficient K3 to be multiplied by the output ratio set in accordance with the removal ratio illustrated in FIG. 6. The control information 43h includes a fourth compensation coefficient K4 to be multiplied by the output ratio set in accordance with the removal ratio illustrated in FIG. 7. The control information 43e includes a correspondence relationship between the range obtained by multiplying the tool diameter by tool rotational speed and the first compensation coefficient K1. The control information 43f includes a correspondence relationship between the range of the circumferential speed and the second compensation coefficient K2. The control information 43g includes a correspondence relationship between the material information and the third compensation coefficient K3. The control information 43h includes a correspondence relationship between the material information and the fourth compensation coefficient K4. In FIGs. 10 to 13, the correspondence relationship is illustrated in a table, but the correspondence relationship may be written in a known method such as a csv file format or a database. Among the contents illustrated in FIGs. 10 to 13, only the thresholds MTH1 to MTH2, VTH1 to VTH2, the identifiers representing the respective materials, and the values of the first to third compensation coefficients K1 to K3 may be stored in the memory 2M, so that the hardware processor 2P, which executes the equipment control program 42, may determine the first to fourth compensation coefficients K1 to K4 based on the criteria illustrated in FIGs. 10 to 13, by using the information stored in the memory 2M.

As the tool diameter and the tool rotational speed increase, the scattering degree of the cutting chips increases, and a large amount of coolant is needed to discharge the cutting chips. For this reason, in FIG. 10, the first compensation coefficient K1 is so set that as a value obtained by multiplying the tool diameter by the tool rotational speed increases, the first compensation coefficient K1 increases. Thus, as the value obtained by multiplying the tool diameter by the tool rotational speed increases, the output of the first actuator is set to increase. Similarly, as the circumferential speed increases, the scattering degree of the cutting chips increases, and a large amount of coolant is needed to discharge the cutting chips. For this reason, in FIG. 11, the second compensation coefficient K2 is so set that as the circumferential speed increases, the second compensation coefficient K2 increases. Thus, as the circumferential speed increases, the output of the first actuator is set to increase. In addition, as the material is softer, the scattering degree of the cutting chips increases, and a large amount of coolant is needed to discharge the cutting chips. For this reason, in FIG. 12, the third compensation coefficient K3 is so set that as the material becomes softer, the third compensation coefficient K3 increases. Thus, as the material is softer, the output of the first actuator is set to increase. Furthermore, as the specific gravity of the material increases, it is necessary to increase the flow rate of the coolant in order to flow the cutting chips into the circulation circuit 18. For this reason, in FIG. 13, the fourth compensation coefficient K4 is so set that as the specific gravity increases, the fourth compensation coefficient K4 increases. Thus, as the specific gravity increases, the output of the second actuator is set to increase.

Thus, P1(i) is set as the output ratio (the ratio indicated in FIG. 6) of the first actuator determined by the range of the removal ratio of the augment of the control code G182(i) (i = 1, 2, ... , and i corresponds to the sequential order that appears in the machining program 41), K1(i) is set as the first compensation coefficient K1 determined from the range obtained by multiplying the tool diameter by the tool rotational speed of the argument of the control code G182, K2(i) is set as the second compensation coefficient determined from the range of the circumferential speed of the argument of the control code G182, and K3(i) is set as the third compensation coefficient determined from the material information of the control code G182. In this situation, in a case where the hardware processor 2P, which executes the equipment control program 42, sets an output ratio $P1_{out}(i)$ obtained when the rated output of the first actuator is 100%, $P1_{out}(i)$ is expressed by the following (Formula 1).

$$P1_{out}(i) = K1(i) \times K2(i) \times K3(i) \times P1(i) \ ... \ (Formula\ 1)$$

P2(i) is set as the output ratio (the ratio indicated in FIG. 7) of the second actuator determined by the range of the removal ratio of the augment of the control code G182(i) (i = 1, 2, ... , and i corresponds to the sequential order that appears in the machining program 41), and K4(i) is set as the fourth compensation coefficient K4 determined from the material information of the control code G182. In this situation, in a case where the hardware processor 2P, which executes the equipment control program 42, sets an output ratio $P2_{out}(i)$ obtained when the rated output of the second actuator is 100%, $P2_{out}(i)$ is expressed by the following (Formula 2).

$$P2_{out}(i) = K4(i) \times P2(i) \ ... \ (Formula\ 2)$$

It is to be noted that in a case where at least one of the tool diameter and the tool rotational speed is not set by the argument of the control code G182, 1 is set to K1(i). In a case where the circumferential speed is not set by the argument of the control code G182, 1 is set to K2(i). In a case where the material information is not set by the individual data 44 or the argument of the control code G181, 1 is set to K3(i). In a case where the material information is not set by the individual data 44 or the argument of the control code G181, 1 is set to K4(i). In addition, in a case where the value of (Formula 1) exceeds 100%, 100% is set to $P1_{out}(i)$. In a case where the value of (Formula 2) exceeds 100%, 100% is set to $P2_{out}(i)$. The hardware processor 2P, which executes the equipment control program 42, controls the first and second actuators, based on $P1_{out}(i)$ and $P2_{out}(i)$, which are obtained as described above. The hardware processor 2P, which executes the equipment control program 42, controls the third and fourth actuators with reference to the correspondence relationships in FIGs. 8 and 9. It is to be noted that in a case where the additional information 41a is not included in the machining program 41, the hardware processor 2P, which executes the equipment control program 42, controls the first to fourth actuators with a default setting value of 100%. In this manner, the hardware processor 2P, which executes the equipment control program 42, is capable of actuating at least one piece of peripheral equipment (for example, the first pump 15, the second pump 16, the chip collector 20, and the fan 33), based on the determined control method.

As described heretofore, when the machine tool 1 performs at least one of operations, the hardware processor 2P, which executes the equipment control program 42, is capable of controlling the machine tool 1 to actuate at least one piece of peripheral equipment (for example, the first pump 15, the second pump 16, the chip collector 20, and the fan 33), based on the cutting information, other than the first equipment that operates the workpiece W and the second equipment that operates at least one tool T out of the plurality pieces of equipment of the machine tool 1. Therefore, the control codes G181 and G182 each can be said as a code for causing the machine tool 1 to perform processing of determining a to-be-determined equipment control method corresponding to the cutting information out of a plurality of control methods, which are stored in the memory 2M, which are for at least one piece of peripheral equipment, and which are respectively associated with a plurality of ranges of the parameter (the removal ratio), and actuating at least one piece of peripheral equipment, based on the determined control method.

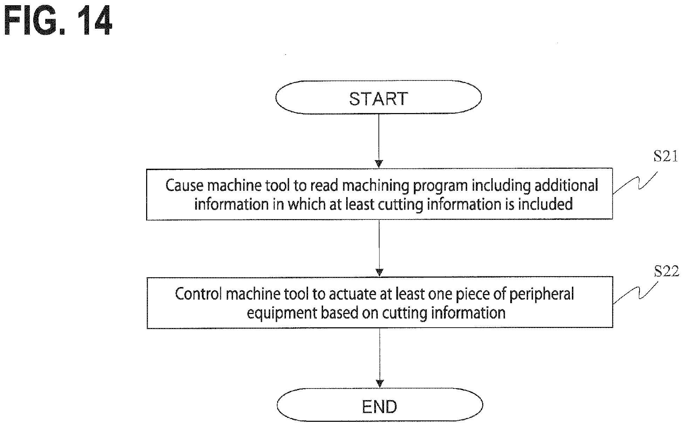

FIG. 14 is a flowchart of a processing flow of the control method of the machine tool 1. The control method includes, as step S21, causing the machine tool 1 to read the machining program 41 including the additional information 41a in which at least the cutting information (for example, the removal ratio) is included. Specifically, in step S21, the control method includes causing the hardware processor 2P of the machine tool 1 to read the cutting information in accordance with the control code G181 and/or the control code G182.

As step S22, when the machine tool 1 performs at least one of operations of the workpiece W and at least one tool T, the control method includes controlling the machine tool 1 to actuate at least one piece of peripheral equipment (for example, the first pump 15, the second pump 16, the chip collector 20, and the fan 33), based on the cutting information (for example, the removal ratio), other than the equipment (the first equipment) for operating the workpiece W out of the plurality of pieces of equipment of the machine tool 1 and the equipment (the second equipment) for operating at least one tool T. Specifically, in step S22, the control method includes: causing the hardware processor 2P of the machine tool 1 to determine a to-be-determined control method corresponding to the additional information 41a out of at least one control method, which is for at least one piece of peripheral equipment, and which is stored in the memory 2M of the machine tool 1; and actuating at least one piece of peripheral equipment, based on the determined control method. More specifically, in step S22, the control method includes causing the hardware processor 2P to determine a to-be-determined control method, based on the machining information (examples including the tool diameter, the tool rotational speed, the circumferential speed, and the material information) and the cutting information (for example, the removal ratio). The control method includes causing the hardware processor 2P of the machine tool 1 to determine a to-be-determined equipment control method corresponding to the parameter of the cutting information out of the equipment control information 43, which is stored in the memory 2M of the machine tool 1, and which defines a plurality of control methods for at least one piece of peripheral equipment respectively associated with a plurality of ranges of the parameter (for example, the removal ratio) represented by at least a partial size of a to-be-cut shape.

<Operation and Effect of Embodiments>

The machine tool 1, the machine tool system 100, the control method of the machine tool 1, the generation method of the machining program 41, and the program of the generation method according to the present embodiment obtain the cutting information from a to-be-cut portion, and thus, it becomes possible to control at least one piece of peripheral equipment, based on the highly accurate cutting amount. In addition, in the machine tool 1, the machine tool system 100, the control method of the machine tool 1, the generation method of the machining program 41, and the program of the generation method according to an embodiment, the cutting information is included in the machining program 41, so that at least one piece of peripheral equipment can be flexibly controlled in different machine tools.

<Modifications>

In the above-described machine tool system 100, an example of transmitting and receiving data between the machine tool 1 and the computer 99 via the communication interface 99CF, the network NW, and the communication interface 2CF is illustrated. However, data may be transmitted and received via short-range wireless communication such as Bluetooth (registered trademark) or Near Field Communication, or via an interface with an external storage such as a USB or an SD interface. Therefore, the communication interface 99CF and the communication interface 2CF may be simply referred to as an interface 99CF and an interface 2CF as a concept including such an interface.

The data 43a1 to 43d1 and the data 43a2 to 43d2 may be partially omitted, and the control of the actuator corresponding to the omitted data may not necessarily be conducted in accordance with the additional information 41a.

The parameter represented by at least a partial size of the to-be-cut portion is not limited to the removal ratio. A value obtained by dividing at least a partial weight of the to-be-cut portion by the machining time, a value obtained by dividing a work load (load × time) of at least one tool T for at least partially cutting the to-be-cut portion by the machining time, or a value obtained by dividing the amount of heat generated at the time of at least partially cutting the to-be-cut portion by the machining time may be used.

Part of logic or all functions of the above-described equipment control program 42 and the above-described machining program generation program 45 may be achieved on a dedicated processor or in an integrated circuit. The above-described equipment control program 42 and the above-described machining program generation program 45, without being limited to the memory 2M or the memory 99M, which is built in the numerical controller 2 or the computer 99, may be stored in a storage medium to be detachable from the numerical controller 2 or the computer 99 and to be readable by the numerical controller 2 or the computer 99, such as a disk including a floppy disk, an optical disk, a CD-ROM, and a magnetic disk, an SD card, a USB memory, and an external hard disk.

As used herein, the term "comprise" and its variations are intended to mean openended terms, not excluding any other elements and/or components that are not recited herein. The same applies to the terms "include", "have", and their variations.

As used herein, a component suffixed with a term such as "member", "portion", "part", "element", "body", and "structure" is intended to mean that there is a single such component or a plurality of such components.

As used herein, ordinal terms such as "first" and "second" are merely used for distinguishing purposes and there is no other intention (such as to connote a particular order) in using ordinal terms. For example, the mere use of "first element" does not connote the existence of "second element"; otherwise, the mere use of "second element" does not connote the existence of "first element".

As used herein, approximating language such as "approximately", "about", and "substantially" may be applied to modify any quantitative representation that could permissibly vary without a significant change in the final result obtained. All of the quantitative representations recited in the present application shall be construed to be modified by approximating language such as "approximately", "about", and "substantially".

As used herein, the phrase "at least one of A and B" is intended to be interpreted as "only A", "only B", or "both A and B".

Obviously, numerous modifications and variations of the present disclosure are possible in light of the above teachings. It is therefore to be understood that within the scope of the appended claims, the present disclosure may be practiced otherwise than as specifically described herein.

**Claims**

1. A control method of a machine tool, the control method comprising:

   causing a processor of the machine tool to read a machining program comprising a program code and additional information, the program code representing at least one of operations of a workpiece and at least one tool by the machine tool, the additional information comprising at least cutting information obtained from a to-be-cut portion, the to-be-cut portion being obtained by excluding a product shape from a workpiece shape; and
   controlling the machine tool to actuate, based on the cutting information, at least one piece of peripheral equipment other than a piece of equipment for operating the workpiece and a piece of equipment for operating the at least one tool out of a plurality of pieces of equipment of the machine tool, when the machine tool performs the at least one of the operations.

2. The control method of the machine tool according to claim 1,

   wherein the additional information further comprises a control code for causing the machine tool to perform processing of controlling the at least one piece of peripheral equipment, based on the cutting information,
   wherein causing the machine tool to read the machining program comprises causing the machine tool to read the cutting information in accordance with the control code, and
   wherein controlling the machine tool comprises:

      causing the processor to determine a to-be-determined control method corresponding to the additional information out of at least one control method for the at least one piece of peripheral equipment, the at least one control method being stored in a storage of the machine tool; and
      actuating the at least one piece of peripheral equipment, based on the determined control method.

3. The control method of the machine tool according to claim 2,

   wherein the additional information further comprises machining information representing a machining condition when the at least one operation is performed, and

wherein controlling the machine tool comprises causing the processor to determine the to-be-determined control method, based on the machining information and the cutting information.

4. The control method of the machine tool according to one of claims 1 to 3,

wherein the cutting information comprises a parameter represented by at least a partial size of the to-be-cut portion, and
wherein controlling the machine tool comprises:

causing the processor to determine a to-be-determined equipment control method corresponding to the parameter of the cutting information out of a plurality of control methods for the at least one piece of peripheral equipment, the plurality of control methods being stored in a storage of the machine tool and being respectively associated with a plurality of ranges of the parameter; and
actuating the at least one piece of peripheral equipment, based on the determined control method.

5. The control method of the machine tool according to one of claims 1 to 4, wherein the parameter comprises a removal ratio obtained by dividing at least a partial volume of the to-be-cut portion by a machining time necessary for cutting with the at least one tool.

6. The control method of the machine tool according to claim 5,

wherein the storage stores:

information representing a first correspondence relationship between a plurality of ranges of the removal ratio and a plurality of energy saving levels respectively corresponding to the plurality of ranges; and
information representing a second correspondence relationship between the plurality of energy saving levels and the plurality of control methods for the at least one piece of peripheral equipment, and

wherein the plurality of control methods are defined to reduce an output of the at least one piece of peripheral equipment, as the energy saving level increases.

7. The control method of the machine tool according to one of claims 1 to 6, wherein the at least one piece of peripheral equipment comprises at least one of a coolant supplier, a chip conveyer, and a mist collector, which are comprised in the machine tool.

8. A generation method of a program, the generation method comprising:

causing a computer to calculate cutting information obtained from a to-be-cut portion, based on a workpiece shape and a product shape, the to-be-cut portion being obtained by excluding the product shape from the workpiece shape; and
causing the computer to generate a machining program in which additional information comprising at least the cutting information is added to a program code for machining a workpiece to obtain the product shape, the program code representing at least one of operations of the workpiece and at least one tool by a machine tool.

9. The generation method of the program according to claim 8, wherein the additional information further comprises a control code for causing the machine tool to perform processing of controlling, based on the cutting information, at least one piece of peripheral equipment other than a piece of equipment for operating the workpiece and a piece of equipment for operating the at least one tool out of a plurality of pieces of equipment of the machine tool.

10. The generation method of the program according to claim 9,

wherein the additional information further comprises machining information representing a machining condition when the at least one of the operations is performed, and
wherein the control code is a code for causing the machine tool to perform the processing of controlling the at least one piece of peripheral equipment, based on the machining information and the cutting information.

11. The generation method of the program according to one of claims 8 to 10,

wherein the cutting information comprises a parameter represented by at least a partial size of the to-be-cut portion, and

wherein the control code is a code for causing the machine tool to determine a to-be-determined equipment control method corresponding to the parameter of the cutting information out of a plurality of control methods for the at least one piece of peripheral equipment, the plurality of control methods being stored in a storage of the machine tool and being respectively associated with a plurality of ranges of the parameter, and actuating the at least one piece of peripheral equipment, based on a determined control method.

12. The generation method of the program according to one of claims 8 to 11, wherein the cutting information comprises a removal ratio obtained by dividing at least a partial volume of the to-be-cut portion by a machining time necessary for cutting in the at least one of the operations.

13. A program comprising an instruction, when executed by a computer, for causing the computer to perform processing of the generation method of the program of one of claims 8 to 12.

14. A machine tool comprising means for performing the control method of the machine tool of one of claims 1 to 7.

15. A machine tool system comprising:

a computer comprising means for performing the generation method of the program of one of claims 8 to 12; and
the machine tool of claim 14.

FIG. 1

FIG. 2

# FIG. 3

```
                    ┌─────────────────────┐
                    │        START        │
                    └─────────────────────┘
                               │
                               ▼                              S11
        ┌──────────────────────────────────────────────┐
        │        Calculate cutting information          │
        └──────────────────────────────────────────────┘
                               │
                               ▼                              S12
        ┌──────────────────────────────────────────────┐
        │ Generate program code representing at least   │
        │ one of operations of workpiece and at least   │
        │                  one tool                     │
        └──────────────────────────────────────────────┘
                               │
                               ▼                              S13
        ┌──────────────────────────────────────────────┐
        │ Generate machining program in which           │
        │ additional information is added to program    │
        │                   code                        │
        └──────────────────────────────────────────────┘
                               │
                               ▼
                    ┌─────────────────────┐
                    │         END         │
                    └─────────────────────┘
```

```
1: %
2: O1000
3: G181 R18.6667
4: G90 G17 G69
5: G80 G40 G49
6: G0 G53 Z0.
7: G0 G53 X430. Y0.
8: G0 A0. C0.
9: G54
10: G0 G53 Z0.
11: T23 M6
12: G49
13: (OPERATION 4: T23 FACE MILLING)
14: G182 R26.0536 T63. S1263
15: S1263.
16: M3
17: M8
18: M7
19: G0 A0. C0.
20: G68.2 P0 X0. Y0. Z0. I0. J0. K360.
21: G53.1 P0
22: G61.1
23: G0 X-112.8 Y16.85
24: G0 G91 G43 H23 Z-0.01
25: G90
26: G0 Z15.
27: G0 Z5.5
28: G1 Z0.5 F575.
29: G1 X106.5 F821.
30: G1 X112.8
31: G2 X112.8 Y-35.8 I0. J-26.325
32: G1 X-106.5
33: G0 Z15.

34: (OPERATION 5: T23 FACE MILLING)
35: G182 R6.43018 T63. S1263
36: G0 X-112.5851 Y41.6
37: G0 Z15.
38: G0 Z5.
39: G1 Z0. F575.
40: G1 X106.2851 F821.
41: G1 X112.8
42: G2 X112.8 Y13.7 I0. J-13.95
43: G1 X-106.5
44: G1 X-112.8
45: G3 X-112.8 Y-14.2 I0. J-13.95
46: G1 X106.5
47: G0 Z15.
48: M9
49: M5
50: G49
51: G64
52: G69
53: G0 G53 Z0.
54: T83 M6
55: G49
56: (OPERATION 17: T83 SIMPLE DRILLING)
57: G182 R41.4794 T14. S2274
58: S2274.
59: M3
60: M8
61: M7
62: G0 A0. C0.
63: G68.2 P0 X0. Y0. Z0. I0. J0. K360.
64: G53.1 P0
65: G61.1
66: G0 X52.4849 Y-12.2857
67: G0 G91 G43 H83 Z-0.01
68: G90
69: G0 Z6.
70: G98 G81 X52.4849 Y-12.2857 Z-41.5478 R6. F341.
71: X-57.4849 Y17.2857
72: G80
73: G0 Z6.
74: M9
75: M5
76: G49
77: G64
78: G69
79: G0 G53 Z0.
80: G0 G53 X430. Y0.
81: G0 A0. C0.
82: M30
```

# FIG. 4

41

# FIG. 5

| Workpiece number | Material |
|---|---|
| 100 | |
| 1000 | SC45C |
| 2000 | SUS304 |
| 3000 | A5052 |
| 4000 | AC4C |
| 100000 | FC250 |
| 200000 | FC450 |

44

# FIG. 6

| Control flag | 1 |
|---|---|

43a1

| Energy saving level | Range of removal ratio | Ratio of output when rated output of first actuator is 100% |
|---|---|---|
| 1 | Equal to or larger than TH1 | 100% |
| 2 | Equal to or larger than TH2 and smaller than TH1 (TH2 < TH1) | 70% |
| 3 | Smaller than TH2 | 70% |

43a2

# FIG. 7

| Control flag | 2 |
|---|---|

<u>43b1</u>

| Energy saving level | Range of removal ratio | Ratio of output when rated output of second actuator is 100% |
|---|---|---|
| 1 | Equal to or larger than TH3 | 70% |
| 2 | Smaller than TH3 | 60% |

<u>43b2</u>

# FIG. 8

| Control flag | 1 |
|---|---|

43c1

| Energy saving level | Range of removal ratio | Ratio of output when rated output of third actuator is 100% |
|---|---|---|
| 1 | Equal to or larger than TH4 | 100% |
| 2 | Equal to or larger than TH5 and smaller than TH4 (TH4 < TH5) | 90% |
| 3 | Smaller than TH5 | 80% |

43c2

# FIG. 9

| Control flag | 1 |
|---|---|

43d1

| Energy saving level | Range of removal ratio | Ratio of output when rated output of fourth actuator is 100% |
|---|---|---|
| 1 | Equal to or larger than TH6 | 100% |
| 2 | Equal to or larger than TH7 and smaller than TH6 (TH7 < TH6) | 67% |
| 3 | Equal to or larger than TH8 and smaller than TH7 (TH8 < TH7) | 50% |
| 4 | Equal to or larger than TH9 and smaller than TH8 (TH9 < TH8) | 33% |
| 5 | Smaller than TH9 | 0% |

43d2

# FIG. 10

| Tool diameter ✕<br>Range of tool rotational speed | Value of first compensation<br>coefficient K1 |
|---|---|
| Smaller than MTH1 | 1.0 |
| Equal to or larger than MTH1 and<br>smaller than MTH2<br>(MTH1 < MTH2) | K11<br>(K11>1.0) |
| Equal to or larger than MTH2 | K12<br>(K12>K11) |

43e

# FIG. 11

| Range of circumferential speed | Value of second compensation coefficient K2 |
|---|---|
| Smaller than VTH1 | 1.0 |
| Equal to or larger than VTH1 and smaller than VTH2 (VTH1 < VTH2) | K21 (K21>1.0) |
| Equal to or larger than VTH2 | K22 (K22>K21) |

43f

# FIG. 12

| Type of material | Value of third compensation coefficient K3 |
|---|---|
| FC250/FCD450 or unregistered | 1.0 |
| S45C/SCM415/ SUS304/SS400 | K31 (K31>1.0) |
| A5052/AC4C | K32 (K32>K31) |

43g

# FIG. 13

| Type of material | Value of fourth compensation coefficient K4 |
|---|---|
| FC250/FCD450 or unregistered | 1.0 |
| S45C/SCM415/ SUS304/SS400 | K41 (K41>1.0) |
| A5052/AC4C | K42 (K42<1.0) |

43h

# FIG. 14

```
                    ( START )
                        │
                        ▼
┌──────────────────────────────────────────────────────┐   S21
│ Cause machine tool to read machining program including │
│ additional information in which at least cutting        │
│ information is included                                 │
└──────────────────────────────────────────────────────┘
                        │
                        ▼
┌──────────────────────────────────────────────────────┐   S22
│ Control machine tool to actuate at least one piece of   │
│ peripheral equipment based on cutting information        │
└──────────────────────────────────────────────────────┘
                        │
                        ▼
                    ( END )
```

**EP 4 625 074 A1**

<table>
<tr><td colspan="2">INTERNATIONAL SEARCH REPORT</td><td>International application No.<br><br>**PCT/JP2023/031014**</td></tr>
</table>

**A.    CLASSIFICATION OF SUBJECT MATTER**

*G05B 19/18*(2006.01)i; *B23Q 15/00*(2006.01)i
FI:    G05B19/18 T; B23Q15/00 A

According to International Patent Classification (IPC) or to both national classification and IPC

**B.    FIELDS SEARCHED**

Minimum documentation searched (classification system followed by classification symbols)

G05B19/18; B23Q15/00; B23Q11/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 7303958 B1 (YAMAZAKI MAZAK CORPORATION) 05 July 2023 (2023-07-05)<br>    paragraphs [0036]-[0037], [0051]-[0069], fig. 1-8 | 1-15 |
| Y | JP 7-251347 A (OKUMA CORPORATION) 03 October 1995 (1995-10-03)<br>    paragraphs [0008]-[0011], fig. 1-2 | 1-15 |
| Y | JP 2005-138259 A (MAKINO MILLING MACH CO., LTD.) 02 June 2005 (2005-06-02)<br>    paragraphs [0014]-[0017], fig. 1 | 5-7, 12-15 |
| A | JP 2019-64820 A (ENOMOTO BEA CO., LTD.) 25 April 2019 (2019-04-25)<br>    paragraphs [0027]-[0050], fig. 1-3 | 1-15 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **21 September 2023** | **03 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/031014**

| Patent document cited in search report | | | Publication date (day/month/year) | Patent family member(s) | Publication date (day/month/year) |
|---|---|---|---|---|---|
| JP | 7303958 | B1 | 05 July 2023 | (Family: none) | |
| JP | 7-251347 | A | 03 October 1995 | (Family: none) | |
| JP | 2005-138259 | A | 02 June 2005 | (Family: none) | |
| JP | 2019-64820 | A | 25 April 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7266185 A
- JP 2017199256 A
- JP H07266185 A
- WO 2004038522 A